# EUROPÄISCHE PATENTSCHRIFT

(11) **EP 3 401 017 B1**
(45) Veröffentlichungstag und Bekanntmachung des Hinweises auf die Patenterteilung: **28.08.2019**
(21) Anmeldenummer: 17170038.8
(22) Anmeldetag: 09.05.2017
(51) Int. Cl.: B02C 4/02, F16H 37/04, B02C 4/42, F16H 1/22, B02C 4/32

(54) **FUTTER- UND LEBENSMITTELWALZENMÜHLE MIT EINEM GETRIEBE**
FEED AND FOODSTUFF ROLLER MILL WITH A TRANSMISSION
BROYEUR À CYLINDRES POUR PRODUIT ALIMENTAIRE OU FOURRAGE COMPRENANT UNE TRANSMISSION

(43) Veröffentlichungstag der Anmeldung: 14.11.2018
(73) Patentinhaber: Bühler AG, 9240 Uzwil (CH)
(72) Erfinder: RICKENBACH, Daniel, 9547 Wittenwil (CH); MARK, Daniel, 9500 Wil (CH); HOLENSTEIN, Philippe, 9247 Henau (CH); SCHINDLER, Kaspar, 5723 Teufenthal (CH)
(74) Vertreter: Hepp Wenger Ryffel AG

(56) Entgegenhaltungen:
- EP-A1- 2 883 612
- CN-U- 205 270 349
- CN-Y- 201 090 673
- DE-A1- 4 104 439
- DE-C- 410 300

## Beschreibung

Die Erfindung betrifft eine Futter- und Lebensmittelwalzenmühle mit einem Getriebe.

Die erfindungsgemässe Futter- und Lebensmittelwalzenmühle findet insbesondere Anwendung bei der Verarbeitung von Getreide in der Müllerei (insbesondere Vermahlen von Weichweizen, Durum, Roggen, Mais und/oder Gerste) oder in der Spezialmüllerei (insbesondere Schälen und/oder Vermahlen von Soja, Buchweizen, Gerste, Dinkel, Hirse/Sorghum, Pseudocerealien und/oder Hülsenfrüchten); der Herstellung von Futter für Nutz- und Haustiere, Fische und Krustentiere; der Verarbeitung von Ölsaaten; der Verarbeitung von Biomasse und Herstellung von Energiepellets; der industriellen Mälzerei und Schroterei und der Verarbeitung von Kakaobohnen, Nüssen und Kaffeebohnen.

Eine Futter- und Lebensmittelwalzenmühle umfasst in der Regel wenigstens zwei Walzen, welche gegenläufig und ggf. mit unterschiedlichen Geschwindigkeiten angetrieben werden. Durch die Auswahl der Walzenoberfläche, Mahlspaltbreite, Walzenanpressdruck sowie Geschwindigkeitsunterschied kann die Futter- und Lebensmittelwalzenmühle bei einer Mehrzahl von Verfahrensschritten angewendet werden.

Bei bekannten Futter- und Lebensmittelwalzenmühlen werden die Walzen über Riemen und Riemenscheiben angetrieben. Dabei unterliegen die Riemen einem Verschleiss, so dass abgetragene Riemenpartikel in den Produktfluss gelangen können, was hinsichtlich der Hygiene unerwünscht ist. Zudem sind Montage und Unterhalt eines solchen Riemenantriebes sehr aufwendig, da eine Mehrzahl von einzelnen Teilen entfernt und wieder zusammengesetzt werden muss. Ferner sind Riemen und Riemenscheiben oft nur durch Schutzabdeckungen geschützt und daher aus Gründen der Sicherheit bedenklich.

Es ist daher Aufgabe der Erfindung, eine Futter- und Lebensmittelwalzenmühle der eingangs genannten Art anzugeben, welche die Nachteile des Bekannten verhindern und insbesondere eine hygienische Bauweise, eine vereinfachte Montage und Demontage sowie eine genauere Messung des Walzenanpressdruckes erlaubt und einen höheren Wirkungsgrad als Vorrichtungen nach dem Stand der Technik aufweist.

Die Aufgabe wird mit einer Futter- und Lebensmittelwalzenmühle mit einem Getriebe und mit einer Mehrzahl von Walzen gemäss dem unabhängigen Anspruch gelöst.

Das Getriebe umfasst ein Lagergehäuse, in welchem eine Eingangswelle, eine erste Ausgangswelle und eine zweite Ausgangswelle aufgenommen sind.

Die Eingangswelle und die erste Ausgangswelle stehen dabei zueinander senkrecht, wobei die erste Ausgangswelle und die zweite Ausgangswelle zueinander parallel angeordnet sind.

Dabei stehen die Eingangswelle und die erste Ausgangswelle über ein Kegelzahnradpaar miteinander in Wirkverbindung.

Die erste Ausgangswelle und die zweite Ausgangswelle stehen über eine Drehmomentübertragungsanordnung ebenfalls miteinander in Wirkverbindung.

Die Drehmomentübertragungsanordnung ist bevorzugt als Stirnzahnradpaar ausgebildet, wobei ein Zahnrad an der ersten Ausganswelle und das andere Zahnrad an der zweiten Ausgangswelle angeordnet ist.

Die Drehmomentübertragungsanordnung kann alternativ als stufenloses Getriebe, insbesondere als CVT-Getriebe ausgebildet sein. Dies hat den Vorteil, dass die Über- oder Untersetzung zwischen der ersten und zweiten Ausgangswelle stufenlos und sehr einfach einstellbar ist, ohne dass bspw. die Zahnräder eines Stirnzahnradpaares ausgetauscht werden müssen.

Die erste Ausgangswelle wird zum Antreiben der ersten Walze der Futter- und Lebensmittelwalzenmühle verwendet.

Die zweite Ausgangswelle wird zum Antreiben der zweiten Walze verwendet.

Wenn die Futter- und Lebensmittelwalzenmühle mehr als zwei Walzen umfasst, kann das Getriebe weitere Ausgangswellen umfassen, welche sowohl von der ersten Ausgangswelle als auch von der zweiten Ausgangswelle angetrieben werden.

Die Erfindung erlaubt eine kompakte und hygienische Bauweise und kann auch bei der Aufwertung von bereits bestehenden Futter- und Lebensmittelwalzenmühlen eingesetzt werden, da das erfindungsgemässe Getriebe einseitig anbringbar ist und mit verhältnismässig niedrigem Aufwand installiert werden kann.

Bei Futter- und Lebensmittelwalzenmühlen nach dem Stand der Technik, wie beispielsweise aus der DE 410 300 C bekannt, sind oft der Antrieb bzw. Antriebsscheiben an einer Seite der Walzen und der sog. Übertrieb an der anderen Seite der Walzen angeordnet. Der Übertriebsriemen wird dabei mittels einer Spannvorrichtung gespannt. Dies führt nicht nur zu einer einseitigen Belastung der Walzen, wodurch die Spaltbereite beeinflusst wird, sondern erschwert auch die Bestimmung des Walzenanpressdruckes, da die Spannkraft des Übertriebsriemen, welche von verschiedenen Faktoren abhängt, berücksichtigt werden muss. Durch die einseitige Anordnung von Antrieb und Übertrieb erlaubt das erfindungsgemässe Getriebe die Entkopplung von Querkräften, so dass der Walzenanpressdruck einfacher bestimmbar wird. Ferner wird damit die Verwendung von Standardelektromotoren zum Antreiben der Eingangswelle ermöglicht.

Das Getriebe ist dabei bevorzugt derart ausgebildet, dass es zur Drehmomentabstützung mit einem Mühlenrahmen befestigbar ist.

Die Achsen der Eingangswelle, der ersten Ausgangswelle und der zweiten Ausgangswelle liegen erfindungsgemäss in einer gemeinsamen Ebene.

Eine solche Anordnung erlaubt eine noch kompaktere Bauweise des Getriebes, so dass dieses auch in beengten Platzverhältnissen eingesetzt werden kann.

Der Schnittpunkt der Achse der Eingangswelle mit der Achse der ersten Ausgangswelle ist erfindungsgemäss zwischen dem Kegelzahnrad und der Drehmomentübertragungsanordnung angeordnet.

Insbesondere ist der Schnittpunkt zwischen dem Kegelzahnrad und dem Stirnzahnrad der ersten Ausgangswelle angeordnet.

Auch kann der Schnittpunkt zwischen dem Kegelzahnrad und einem Zahnrad oder einer Riemenscheibe des stufenlosen Getriebes, die auf der ersten Ausgangswelle montiert sind, angeordnet sein. Auch diese Variante erlaubt eine besonders kompakte Bauweise des Getriebes.

Bevorzugt ist das Kegelzahnrad der Eingangswelle an deren stirnseitigen Ende angeordnet.

Bevorzugt ist die erste Ausgangswelle und/oder die zweite Ausgangswelle beidseitig gelagert.

Bei einer Ausführungsform mit einer als Stirnzahnradpaar ausgebildeten Drehmomentübertragungsanordnung weist das Stirnzahnradpaar bevorzugt ein Untersetzungsverhältnis, insbesondere zwischen 1:1,25 und 1:3, auf.

Bevorzugt umschliesst das Lagergehäuse das gesamte Getriebe. Selbstverständlich sind die Eingangswelle und die erste sowie die zweite Ausgangswelle derart aufgenommen, dass ein Antrieb bzw. die Walzen über z.B. Kupplungen anschliessbar sind. Eine geschlossene Bauweise des Getriebes ist bevorzugt, da somit nicht nur die Hygiene der Produktstrecke verbessert wird, sondern dabei das Getriebe selbst von den oft rauen Umweltbedingungen geschützt ist.

Die Futter- und Lebensmittelwalzenmühle umfasst dabei wenigstens zwei um eine Längsachse drehbar gelagerte Walzen.

Wenigstens eine Walze ist dabei fest und die andere Walze beweglich gelagert, so dass eine Walzenspaltweite einstellbar ist.

Erfindungsgemäss umfasst die Futter- und Lebensmittelwalzenmühle ein Getriebe wie obenstehend beschrieben.

Die Eingangswelle ist dabei mit einem Antrieb zum Antreiben des Getriebes und folglich der Ausgangswellen gekoppelt.

Die erste Ausgangswelle ist bevorzugt mit der fest angeordneten Walze und die beweglich angeordnete Walze mit der zweiten Ausgangswelle gekoppelt. Eine umgekehrte Kopplung ist ebenso denkbar, so dass die untenstehende Beschreibung der bevorzugten Kopplungsmöglichkeiten entsprechend anwendbar ist.

Somit kann eine Futter- und Lebensmittelwalzenmühle mit einem erfindungsgemässen Getriebe einfach, kompakt und hygienisch betrieben werden. Die sehr platzraubende und hygienisch nicht besonders vorteilhafte Anordnung von Riemenscheiben und Riemen entfällt dabei, so dass auch die Sicherheit einer Futter- und Lebensmittelwalzenmühle erhöht wird. Zudem kann somit eine Futter- und Lebensmittelwalzenmühle bereitgestellt werden, die ab Werk mit einem Antrieb versehen ist

Die fest angeordnete Walze ist bevorzugt mit der ersten Ausgangswelle über eine elastische Kupplung gekoppelt. Bei der elastischen Kupplung handelt es sich insbesondere um eine Klauenkupplung.

Somit kann die erste Ausgangswelle sehr einfach auf einen Walzenantriebsstummel aufgesteckt werden.

Bevorzugt ist die beweglich angeordnete Walze mit der zweiten Ausgangswelle über eine Teleskopkardanwelle gekoppelt.

Dadurch, dass die zweite Walze zur Einstellung eines Walzenspaltes beweglich gelagert ist, der Abstand zwischen der ersten und der zweiten Ausgangswelle des Getriebes konstruktionsbedingt jedoch fest eingestellt ist, kann durch die Kopplung mit einer Teleskopkardanwelle die Problematik des Achsenversatzes einfach und platzsparend gelöst werden. Zudem erlaubt eine solche Verbindung ebenfalls eine schnelle Montage und Demontage des Getriebes.

In der Regel wird die zweite Walze mit einer niedrigeren Drehzahl betrieben als die erste Walze. Wenn Material dem Walzenspalt zugefügt wird und die zweite Walze zur Einstellung des Walzenspaltes eingerückt wird, wird die zweite Walze aufgrund der Reibung mit dem Material beschleunigt. Das erfindungsgemässe Getriebe, insbesondere die Drehmomentübertragungsanordnung, verhindert, dass die zweite Walze die Drehzahl der ersten Walze einnimmt und übernimmt quasi eine "Bremsfunktion".
- Fig. 1: den schematischen Aufbau eines erfindungsgemässen Getriebes; und
- Fig. 2: eine schematische Draufsicht auf eine Futter- und Lebensmittelwalzenmühle mit einem erfindungsgemässen Getriebe.

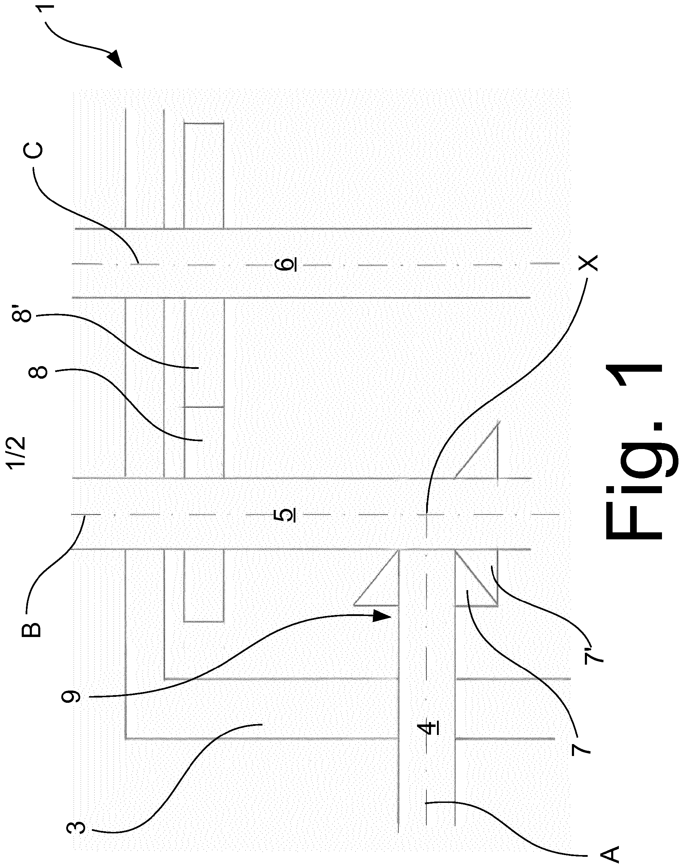

In der Figur 1 ist schematisch ein Getriebe 1 gezeigt. Das Getriebe 1 umfasst dabei ein Lagergehäuse 3, welches der Übersicht halber nur teilweise dargestellt ist. Es versteht sich, dass das Lagergehäuse 3 das Getriebe 1 vollständig umschliessen und mehrteilig ausgeführt sein kann.

Das Getriebe 1 umfasst eine drehbar gelagerte Eingangswelle 4, deren Achse mit A bezeichnet ist. Die Eingangswelle wird beim Betreiben einer Futter- und Lebensmittelwalzenmühle von einem nicht dargestellten Antrieb angetrieben. An einem Ende 9 der Eingangswelle 4 ist ein Kegelzahnrad 7 angeordnet.

Das Getriebe 1 umfasst ferner eine erste Ausgangswelle 5 und eine zweite Ausgangswelle 6, welche parallel zueinander angeordnet sind. Die Achsen der ersten bzw. der zweiten Ausgangswelle 5 und 6 sind mit B und C bezeichnet. Die erste und die zweite Ausgangswelle 5 bzw. 6 sind ebenfalls im Lagergehäuse 3 gelagert. In der Figur 1 ist schematisch lediglich eine einseitige Lagerung sichtbar. Es ist jedoch zu vermerken, dass eine beidseitige Lagerung vorteilhafter ist.

Die Eingangswelle 4 und die erste bzw. die zweite Ausgangswelle 5 und 6 sind derart angeordnet, dass deren Achsen A, B bzw. C in einer gemeinsamen Ebene (in diesem Fall die Zeichnungsebene) liegen. Dabei ist die Eingangswelle 4 senkrecht zu den beiden Ausgangswellen 5 und 6 angeordnet.

Zum Antreiben der ersten Ausgangswelle 5 greift das stirnseitige Kegelzahnrad 7 in ein komplementäres Kegelzahnrad 7' ein, welches an der ersten Ausgangswelle 5 angeordnet ist. Zum Antreiben der zweiten Ausgangswelle 6 umfasst das Getriebe 1 ein Stirnzahnradpaar 8 und 8'. Das Stirnzahnrad 8 ist an der ersten Ausgangswelle 5 angeordnet und greift in das komplementäre Stirnzahnrad 8' der zweiten Ausgangswelle 6 ein. Das Stirnzahnradpaar 8 und 8' übernimmt auch eine Bremsfunktion der zweiten Ausgangswelle 6 wenn die zweite Ausgangswelle 6 mit einer Walze gekoppelt ist, welche mit einer niedrigeren Drehzahl als die von der ersten Ausgangswelle 5 angetriebenen Walze betrieben wird.

Wie aus der Figur 1 ersichtlich sind das Stirnzahnrad 8 und das Kegelzahnrad 7' der ersten Ausgangswelle 5 bezüglich eines Schnittpunktes X der Achse A der Eingangswelle 4 mit der Achse B der ersten Ausgangswelle 5 entlang der Achse B der ersten Ausgangswelle 5 an beiden Seiten des Schnittpunktes X angeordnet. Somit wird eine sehr kompakte Bauweise des Getriebes 1 ermöglicht.

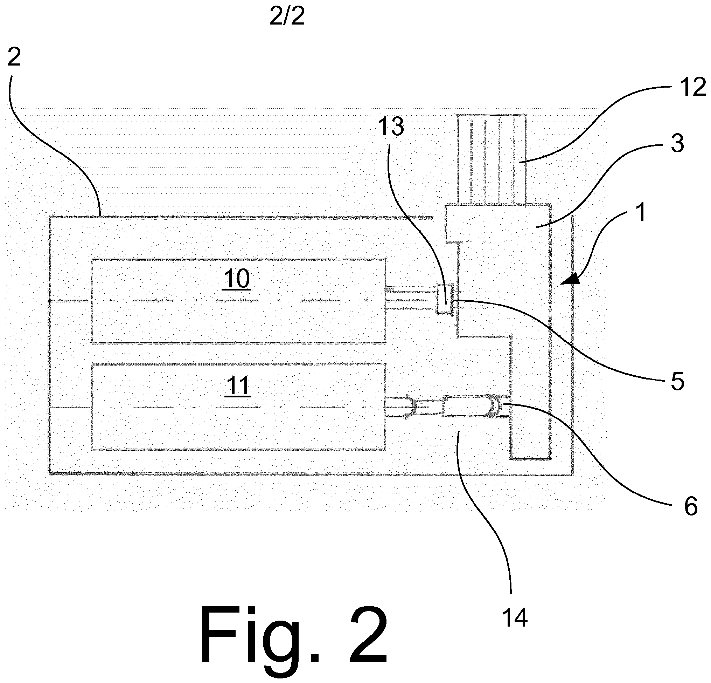

Ein solches Getriebe 1 findet bei einer Futter- und Lebensmittelwalzenmühle 2, wie in der Figur 2 schematisch dargestellt Anwendung. Die Futter- und Lebensmittelwalzenmühle 2 umfasst eine erste und eine zweite Walze 10 bzw. 11. Die Walze 11 kann zur Einstellung eines Walzenspaltes bewegt werden, während die Walze 10 fest in einem Walzenmühlenrahmen aufgenommen ist.

Zum Antreiben beider Walzen 10 und 11 ist ein Getriebe 1 an einer Seite der Walzen 10 und 11 angeordnet, wobei in der Figur 2 lediglich das Lagergehäuse 3 des Getriebes 1 sichtbar ist.

Die Eingangswelle 4 wird mit einem Motor 12 angetrieben. Zum Antreiben der beiden Walzen 10 und 11 sind an der ersten Ausgangswelle 5 sowie an der zweiten Ausgangswelle 6 jeweils eine elastische Klauenkupplung 13 bzw. eine Teleskopkardanwelle 14 angeordnet. Die Teleskopkardanwelle 14 erlaubt einen Achsenversatz zwischen der Drehachse der Walze 11 und der zweiten Ausgangswelle 6, welche durch die Bewegung der zweiten Walze 11 entsteht.

## Patentansprüche

1. Futter- und Lebensmittelwalzenmühle (2) umfassend wenigstens zwei drehbar gelagerten Walzen (10, 11), wobei wenigstens eine Walze (10) fest und die andere Walze (11) beweglich gelagert ist, umfassend ein Getriebe (1) mit einem Lagergehäuse (3) in welchem:
- eine erste Ausgangswelle (5) zum Antreiben einer ersten Walze (10) und
- eine zweite Ausgangswelle (6) zum Antreiben einer zweiten Walze (11) aufgenommen sind, wobei
die erste Ausgangswelle (5) mit einer Walze (10, 11) und die zweite Ausgangswelle (6) mit der anderen Walze (11, 10) gekoppelt ist; und
wobei die erste Ausgangswelle (5) und die zweite Ausgangswelle (6) über eine Drehmomentübertragungsanordnung (8, 8') miteinander in Wirkverbindung stehen;
**dadurch gekennzeichnet, dass**
im Getriebe (1) ferner eine Eingangswelle (4) aufgenommen ist, wobei
die Eingangswelle (4) mit einem Antrieb (12) gekoppelt ist; wobei die Eingangswelle (4) und die erste Ausgangswelle (5) zueinander senkrecht und die erste Ausgangswelle (5) und die zweite Ausgangswelle (6) zueinander parallel angeordnet sind,
die Eingangswelle (4)und die erste Ausgangswelle (5) über ein Kegelzahnradpaar (7, 7') miteinander in Wirkverbindung stehen,
die Achsen (A, B, C) der Eingangswelle (4), der ersten Ausgangswelle (5) und der zweiten Ausgangswelle (6) in einer gemeinsamen Ebene liegen;
und wobei der Schnittpunkt (X) der Achse (A) der Eingangswelle (4) mit der Achse (B) der ersten Ausgangswelle (5) zwischen dem Kegelzahnrad (7') der ersten Ausgangswelle (5) und der Drehmomentübertragungsanordnung (8, 8') der ersten Ausgangswelle (5) angeordnet ist.

2. Futter- und Lebensmittelwalzenmühle (2) nach Anspruch 1, **dadurch gekennzeichnet, dass** das Kegelzahnrad (7) der Eingangswelle (4) an deren stirnseitigen Ende (9) angeordnet ist.

3. Futter- und Lebensmittelwalzenmühle (2) nach einem der vorhergehenden Ansprüche, **dadurch gekennzeichnet, dass** die erste Ausgangswelle (5) beidseitig gelagert ist.

4. Futter- und Lebensmittelwalzenmühle (2) nach einem der vorhergehenden Ansprüche, **dadurch gekennzeichnet, dass** die zweite Ausgangswelle (6) beidseitig gelagert ist.

5. Futter- und Lebensmittelwalzenmühle (2) nach einem der vorhergehenden Ansprüche, **dadurch gekennzeichnet, dass** die Drehmomentübertragungsanordnung (8, 8') als Stirnzahnradpaar ausgebildet ist.

6. Futter- und Lebensmittelwalzenmühle (2) nach Anspruch 5, **dadurch gekennzeichnet, dass** das Stirnzahnradpaar (8, 8') ein Untersetzungsverhältnis zwischen 1:1,25 und 1:3 aufweist.

7. Futter- und Lebensmittelwalzenmühle (2) nach einem der vorhergehenden Ansprüche, **dadurch gekennzeichnet, dass** das Lagergehäuse (3) das gesamte Getriebe (1) umschliesst.

8. Futter- und Lebensmittelwalzenmühle (2) nach einem der vorhergehenden Ansprüche, **dadurch gekennzeichnet, dass** die fest angeordnete Walze (10) mit der ersten oder zweiten Ausgangswelle (5, 6) über eine elastische Kupplung, vorzugsweise eine Klauenkupplung (13), gekoppelt ist.

9. Futter- und Lebensmittelwalzenmühle (2) nach einem der vorhergehenden Ansprüche, **dadurch gekennzeichnet, dass** die beweglich angeordnete Walze (11) mit der ersten oder zweiten Ausgangswelle (5, 6) über eine Teleskopkardanwelle (14) gekoppelt ist.

## Claims

1. Feed and foodstuff roller mill (2) comprising at least two rotatably mounted rollers (10, 11), wherein at least one roller (10) is fixedly mounted and the other roller (11) is movably mounted, comprising a transmission (1) with a bearing housing (3) in which:
- a first output shaft (5) for driving a first roller (10) and
- a second output shaft (6) for driving a second roller (11) are accommodated, wherein
the first output shaft (5) is coupled to one roller (10, 11) and the second output shaft (6) is coupled to the other roller (11, 10); and
wherein the first output shaft (5) and the second output shaft (6) are operatively connected to one another by means of a torque-transmitting arrangement (8, 8');
**characterized in that**
an input shaft (4) is also accommodated in the transmission (1), wherein
the input shaft (4) is coupled to a drive (12); wherein the input shaft (4) and the first output shaft (5) are arranged perpendicular to one another and the first output shaft (5) and the second output shaft (6) are arranged parallel to one another,
the input shaft (4) and the first output shaft (5) are operatively connected to one another by means of a bevel gearwheel pair (7, 7'),
the axes (A, B, C) of the input shaft (4), of the first output shaft (5) and of the second output shaft (6) lie in a common plane;
and wherein the intersection point (X) of the axis (A) of the input shaft (4) with the axis (B) of the first output shaft (5) is arranged between the bevel gearwheel (7') of the first output shaft (5) and the torque-transmitting arrangement (8, 8') of the first output shaft (5).

2. Feed and foodstuff roller mill (2) according to Claim 1, **characterized in that** the bevel gearwheel (7) of the input shaft (4) is arranged at the face end (9) thereof.

3. Feed and foodstuff roller mill (2) according to either of the preceding claims, **characterized in that** the first output shaft (5) is mounted at both sides.

4. Feed and foodstuff roller mill (2) according to any of the preceding claims, **characterized in that** the second output shaft (6) is mounted at both sides.

5. Feed and foodstuff roller mill (2) according to any of the preceding claims, **characterized in that** the torque-transmitting arrangement (8, 8') is formed as a spur gearwheel pair.

6. Feed and foodstuff roller mill (2) according to Claim 5, **characterized in that** the spur gearwheel pair (8, 8') has a speed reduction ratio of between 1:1.25 and 1:3.

7. Feed and foodstuff roller mill (2) according to any of the preceding claims, **characterized in that** the bearing housing (3) encloses the entire transmission (1).

8. Feed and foodstuff roller mill (2) according to any of the preceding claims, **characterized in that** the roller (10) which is fixedly arranged is coupled to the first or second output shaft (5, 6) by means of an elastic clutch, preferably a dog clutch (13).

9. Feed and foodstuff roller mill (2) according to any of the preceding claims, **characterized in that** the roller (11) which is movably arranged is coupled to the first or second output shaft (5, 6) by means of a telescopic cardan shaft (14).

## Revendications

1. Broyeur à cylindres pour produits alimentaires ou fourrage (2), comprenant au moins deux cylindres supportés à rotation (10, 11), au moins un cylindre (10) étant supporté de manière fixe et l'autre cylindre (11) étant supporté de manière mobile, comprenant une transmission (1) avec un logement de palier (3) dans lequel sont reçus :
- un premier arbre de sortie (5) pour l'entraînement d'un premier cylindre (10) et
- un deuxième arbre de sortie (6) pour l'entraînement d'un deuxième cylindre (11),
le premier arbre de sortie (5) étant accouplé à un cylindre (10, 11) et le deuxième arbre de sortie (6) étant accouplé à l'autre cylindre (11, 10) ; et
le premier arbre de sortie (5) et le deuxième arbre de sortie (6) étant en liaison fonctionnelle l'un avec l'autre par le biais d'un agencement de transfert de couple (8, 8') ;
**caractérisé en ce que**
un arbre d'entrée (4) est en outre reçu dans la transmission (1),
l'arbre d'entrée (4) étant accouplé à un entraînement (12) ;
l'arbre d'entrée (4) et le premier arbre de sortie (5) étant disposés perpendiculairement l'un à l'autre et le premier arbre de sortie (5) et le deuxième arbre de sortie (6) étant disposés parallèlement l'un à l'autre,
l'arbre d'entrée (4) et le premier arbre de sortie (5) étant en liaison fonctionnelle l'un avec l'autre par le biais d'une paire de pignons coniques (7, 7'),
les axes (A, B, C) de l'arbre d'entrée (4), du premier arbre de sortie (5) et du deuxième arbre de sortie (6) étant situés dans un plan commun ;
et le point d'intersection (X) de l'axe (A) de l'arbre d'entrée (4) avec l'axe (B) du premier arbre de sortie (5) étant disposé entre le pignon conique (7') du premier arbre de sortie (5) et l'agencement de transfert de couple (8, 8') du premier arbre de sortie (5).

2. Broyeur à cylindres pour produits alimentaires ou fourrage (2) selon la revendication 1, **caractérisé en ce que** le pignon conique (7) de l'arbre d'entrée (4) est disposé au niveau de son extrémité frontale (9).

3. Broyeur à cylindres pour produits alimentaires ou fourrage (2) selon l'une quelconque des revendications précédentes, **caractérisé en ce que** le premier arbre de sortie (5) est supporté des deux côtés.

4. Broyeur à cylindres pour produits alimentaires ou fourrage (2) selon l'une quelconque des revendications précédentes, **caractérisé en ce que** le deuxième arbre de sortie (6) est supporté des deux côtés.

5. Broyeur à cylindres pour produits alimentaires ou fourrage (2) selon l'une quelconque des revendications précédentes, **caractérisé en ce que** l'agencement de transfert de couple (8, 8') est réalisé sous forme de paire de pignons droits.

6. Broyeur à cylindres pour produits alimentaires ou fourrage (2) selon la revendication 5, **caractérisé en ce que** la paire de pignons droits (8, 8') présente un rapport de démultiplication compris entre 1:1,25 et 1:3.

7. Broyeur à cylindres pour produits alimentaires ou fourrage (2) selon l'une quelconque des revendications précédentes, **caractérisé en ce que** le logement de palier (3) enveloppe l'ensemble de la transmission (1).

8. Broyeur à cylindres pour produits alimentaires ou fourrage (2) selon l'une quelconque des revendications précédentes, **caractérisé en ce que** le cylindre disposé fixement (10) est accouplé au premier ou au deuxième arbre de sortie (5, 6) par le biais d'un embrayage élastique, de préférence un embrayage à griffes (13).

9. Broyeur à cylindres pour produits alimentaires ou fourrage (2) selon l'une quelconque des revendications précédentes, **caractérisé en ce que** le cylindre disposé de manière mobile (11) est accouplé au premier ou au deuxième arbre de sortie (5, 6) par le biais d'un arbre à cardan télescopique (14).
